# FASCICULE DE BREVET EUROPEEN

(11) **EP 0 486 412 B1**
(45) Date de publication et mention de la délivrance du brevet: **01.02.1995**
(21) Numéro de dépôt: 91420407.8
(22) Date de dépôt: 15.11.1991
(51) Int. Cl.: A01K 1/01

(54) **Caisse à litière pour animaux domestiques**
Haustiertoilette
Litter box for pets

(30) Priorité: 15.11.1990 FR 9014481
(43) Date de publication de la demande: 20.05.1992
(73) Titulaire: SEB S.A., 69130 Ecully (FR)
(72) Inventeur: Louison, Bernard, FR-42410-Chavanay (FR)

(56) Documents cités:
- WO-A-89/03174
- DE-U- 8 609 826
- DE-U- 8 811 390
- US-A- 4 616 598

## Description

La présente invention se rapporte au domaine technique général des dispositifs de récupération des déjections animales, et plus particulièrement à la récupération des déjections provenant d'animaux domestiques.

La présente invention concerne une caisse à litière de propreté pour animaux domestiques et concerne plus particulièrement mais non exclusivement, une caisse à litière pour des animaux domestiques tels que des chats, des hamsters ou autres.

Les propriétaires d'animaux domestiques, tels que des chats, ont déjà recours à l'emploi d'une caisse à litière pour récupérer les déjections produites par leur animal. Ces caisses à litière se présentent sous la forme d'un réceptacle ouvert à sa partie supérieure, destiné à recevoir et stocker un lit de produits, en général granulé, servant à receuillir, enrober, deshydrater, au moins une partie des déjections.

Il existe un grand nombre de caisses à litière dans l'art antérieur, et on peut citer par exemple le brevet américain US-A-4.616.598 qui décrit une caisse de déjection pour animal domestique visant à améliorer la facilité d'évacuation des déjections et de la litière. A cet effet il est prévu de munir la caisse d'une chambre de stockage incorporant un rouleau de feuilles qu'il convient de tirer et d'étendre au fond de la caisse avant chaque utilisation. Un cadre de tensionnement et de maintien de la feuille en adhérence sur le fond est également prévu. Un tel dispositif souffre d'une série d'inconvénients, et en particulier fait intervenir un nombre exagéré de pièces pour un matériel d'utilisation somme toute réduite conduisant à un coût de fabrication élevé. En outre la multiplicité des pièces ainsi que les mobilités relatives de certaines d'entre elles induisent une fragilisation globale du système susceptible de provoquer à la longue des possibilités de bris de certaines pièces, et en particulier du cadre. Enfin il convient également de remarquer que l'utilisation d'un tel système n'est pas aisé puisqu'il est nécessaire pour l'évacuation des déjections de combiner une série de mouvements susceptibles de conduire à un renversement au moins partiel de la litière souillée.

On connait également par exemple la demande de brevet PCT WO-A-89 0̸3174, qui se propose également d'améliorer la facilité de nettoyage du bac et de la litière, et prévoit à cet effet d'enfiler le bac à litière dans un sac plastique, puis de remplir le bac ainsi protégé, par une couche de litière. Cette réalisation présente une simplification des systèmes antérieurs, mais souffre toujours notamment, de l'inconvénient de laisser le sac plastique en contact avec l'extérieur. Cette disposition ne peut ainsi empêcher l'animal, notamment les chats, de perforer, tout ou partie du sac, ce qui lors du vidage conduit à un déversement incontrôlé de la litière et des déjections à l'extérieur.

Ainsi, les caisses à litière connues à ce jour présentent généralement des formes peu appropriées à une manutention aisée et au transfert rapide, fiable et sûr de leur contenu dans des éléments récupérateurs tels que des sacs. Il y a également lieu de remarquer que la plupart des caisses à litière connues présentent intérieurement des angles intérieurs vifs où les matières fécales peuvent s'incruster et conduire ainsi à une mauvaise aseptie générale de la caisse. Il convient également de noter que la plupart des matériaux utilisés sont facilement rayables ce qui une nouvelle fois, d'une part influence négativement la facilité du déversement et de l'évacuation de la litière, et d'autre part influence négativement les conditions générales d'aseptie.

On connait également par le modèle d'utilité DE-U-8811390̸ une caisse à litière formée par un bac carré pouvant comporter trois pieds pour améliorer sa stabilité en sol inégal. Ce document antérieur n'apporte cependant aucune solution pratique et efficace au problème de la manipulation et du vidage de la litière, un tel problème n'étant par ailleurs aucunement abordé. Le vidage de la litière est, comme tous les dispositifs de l'art antérieur, affecté par la présence des pieds.

L'objet de la présente invention vise en conséquence à remédier aux divers inconvénients énumérés précédemment, et à fournir une caisse à litière pour animaux domestiques permettant une manutention et une évacuation aisée du contenu de la caisse sans risque de déversement à l'extérieur, et ce quel que soit l'élément de récupération utilisé.

Un objet complémentaire à l'invention vise à proposer une caisse à litière permettant d'améliorer d'une manière simple, et à faible coût, la facilité de déversement et d'évacuation du contenu de la caisse.

Un objet complémentaire à l'invention vise à proposer une caisse à litière réalisée au moins partiellement en un matériau évitant les rayures, et facilitant le déversement du contenu de la litière.

Les objet assignés à l'invention sont atteints à l'aide d'une caisse à litière pour animaux domestiques comprenant un contenant délimitant un volume de stockage d'une masse de litière et étant limité par un fond et des parois s'élevant à partir du fond, ladite caisse étant destinée à reposer de manière stable sur une surface porteuse et le contenant étant associé à des moyens d'espacement aptes à former un espace entre la surface porteuse et au moins d'une partie du fond, ledit espace s'étendant sous au moins ladite partie du fond caractérisé en ce que l'espace s'étend sur une longueur axiale suffisante pour permettre l'enfilement au moins partiel du contenant dans un élément récupérateur de litière, du type sac par exemple en engageant une portion de paroi dudit élément récupérateur dans l'espace, de manière à envelopper complètement le contenant sur au moins une partie de la longueur axiale.

Les caractéristiques et avantages de l'invention ressortiront mieux à la lecture de la description donnée ci-après à titre d'exemple non limitatif, en référence aux dessins annexés dans lesquels :
- La figure 1 représente selon une vue en perspective une première variante de réalisation de la caisse à litière conforme à l'invention.
- La figure 2 représente selon une coupe transversale longitudinale effectuée selon les lignes I-I de la figure 1, la variante de réalisation de la figure 1.
- Les figures 3 et 3a représentent selon des coupes transversales longitudinales une seconde variante de réalisation de la caisse à litière conforme à l'invention.
- La figure 4 représente selon une coupe transversale longitudinale une troisième variante de réalisation d'une caisse à litière conforme à l'invention.
- Les figures 5 et 6 représentent selon des coupes transversales longitudinales d'autres variantes de réalisation d'une caisse à litière conforme à l'invention.
- Les figures 7, 8 et 9 présentent selon des vues de côté des variantes d'une caisse à litière conforme à l'invention comportant un système de basculement.
- Les figures 10̸ et 11 représentent respectivement selon une coupe transversale longitudinale et une vue en perspective une autre variante de réalisation de l'invention incluant un dispositif de déroulement de sacs récupérateurs.
- Les figures 12 et 13 représentent, selon des vues en perspective, des modes particuliers de réalisation et de support d'une caisse à litière conforme à l'invention.

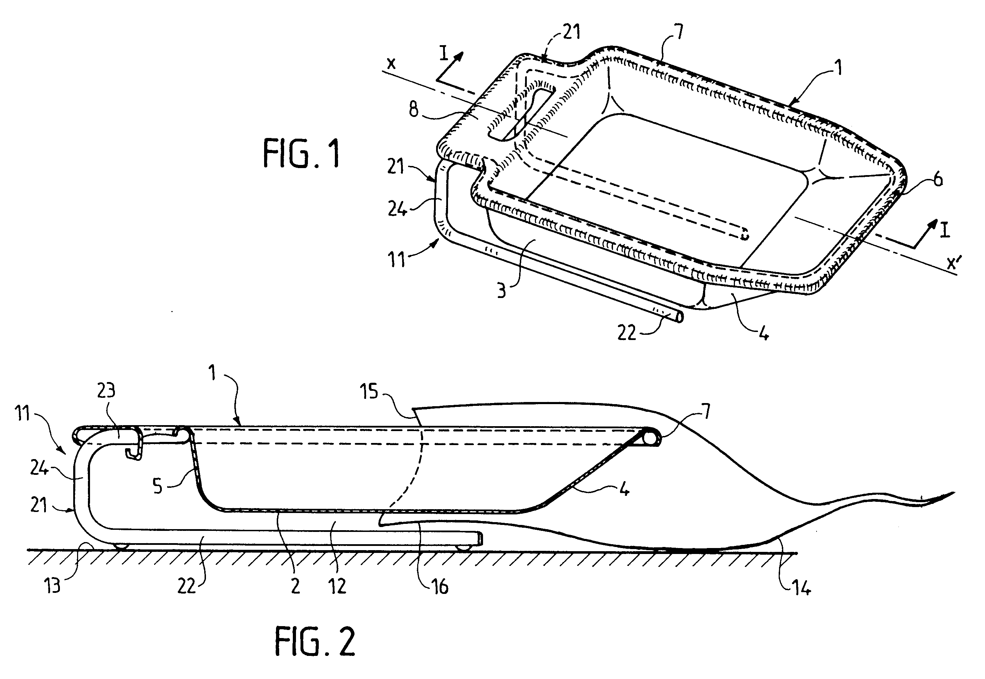

Dans la première variante de réalisation montrée aux figures 1 et 2, la caisse à litière pour animaux domestiques conforme à l'invention comprend un contenant 1 de forme appropriée pour définir un volume de stockage d'une masse de litière, par exemple assimilable à un parallélépidède sensiblement rectangle ou carré. Le contenant 1 est délimité par un fond 2, qui est sensiblement plan, à partir duquel s'élèvent des parois dites latérales 3 s'étendant selon l'axe principal longitudinal x-x' du contenant 1, et des parois 4, 5 avant et arrière. Dans l'exemple montré aux figures 1 et 2, le contenant 1 définit un volume interne de stockage délimité par le fond 2 et l'ensemble des parois latérales 3, et des parois 4, 5 avant et arrière, ledit volume étant assimilable sensiblement à un parallélépidède rectangle ouvert librement à sa partie supérieure. Dans l'exemple particulier montré aux figures 1 et 2, les parois latérales 3 ainsi que la paroi arrière 5 s'étendent sensiblement perpendiculairement au plan d'extension du fond 2, alors que la paroi avant 4 destinée à assumer la fonction de déversement de la litière est inclinée vers l'extérieur du contenant 1 de manière à constituer un bec verseur 6 constituant un prolongement du fond 2. L'extrémité supérieure de chacune des parois est avantageusement pourvue d'un bord roulé 7 s'étendant sur toute la périphérie de l'enveloppe externe du contenant 1.

De manière avantageuse également, le contenant 1 est pourvu dans sa partie arrière opposée au bec verseur 6 d'un moyen de manutention et de préhension du contenant 1, réalisé dans le cas présent sous la forme d'une poignée 8 s'étendant au dessus de la paroi arrière 5 et vers l'extérieur du contenant 1.

Le contenant 1 pourra être réalisé par moulage, par exemple à partir d'un matériau plastique, mais sera préférentiellement réalisé à partir d'une tôle emboutie d'acier ou d'aluminium. Avantageusement il pourra être prévu de revêtir tout ou partie de la surface interne du contenant 1 par un revêtement antiadhésif qui pourra être par exemple à base de PTFE ou de l'une de ses dérivés, ou encore à base de peinture silicone ou de polyester. Extérieurement, le contenant 1 pourra être revêtu de tout revêtement facilitant l'entretien et améliorant l'aspect esthétique tels que peinture, émail, oxydation anodique.

De préférence également il y aura lieu de veiller à ce que les parois latérales 3 ainsi que les parois avant 4 et arrière 5 se raccordent intérieurement en formant des surfaces géométriques exemptes d'angles vifs et suffisamment dégagées, pour permettre un accès et un nettoyage aisé. Avantageusement les parois seront donc reliées à l'aide de surfaces géométiques présentant un rayon important.

Dans la réalisation montrée aux figures 1 et 2, le contenant 1 est associé à des moyens d'espacement 11, aptes à former un espace 12 entre la surface porteuse 13, et le fond 2 ou l'un de ses prolongements. Les moyens d'espacement 11 sont conçus et réalisés de manière que l'espace 12 s'étende sous le fond 2 de l'un de ses prolongements, à partir de l'avant du contenant 1 ou de son bec verseur 6, selon le sens axial définit par l'axe x-x′, et sur une longueur suffisante pour permettre l'enfilement au moins partiel du contenant 1 dans un élement récupérateur de litière 14 tel qu'un sac. L'élément récupérateur de litière 14 peut être de tout type rigide ou souple, se présentant généralement sous la forme d'un volume fini présentant une ouverture 15 à l'intérieur de laquelle au moins une partie du contenant 1 et de préférence au moins la section correspondant au bec verseur 6 est enfilée, la portion de paroi inférieure 16 de l'élément récupérateur 14 étant engagé dans l'espace 12. Il va de soi que l'élément récupérateur 14 doit pouvoir être enfilé sur une longueur suffisante, par exemple de l'ordre de quelques centimètres dans l'espace 12 pour faciliter le déversement sans risque de passage de litière à l'extérieur. Bien évidement l'espace 12 aura de préférence une longueur égale à la longueur du fond 2 mesuré selon l'axe x-x′ de manière à permettre un enfilement total du contenant 1 à l'intérieur de l'élément récupérateur 14.

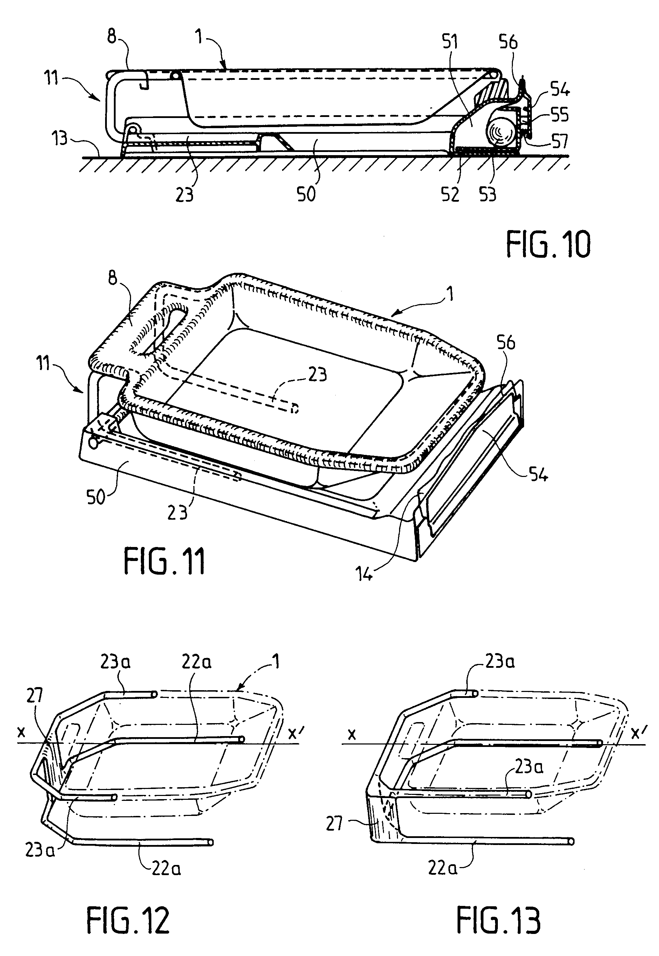

Dans l'exemple de réalisation montré aux figures 1 et 2 les moyens d'espacement 11 sont constitués d'un support formant piètement incluant des bras 21 reposant en appui par une branche 22 sur la surface porteuse 13 et supportant par une branche support 23 le contenant 1. La réalisation montrée aux figures 1 et 2 comporte un empiètement formé par deux supports indépendants définissant chacun un U dont l'âme 24 définit par sa hauteur l'espace 12. La branche d'appui 22 peut s'étendre pratiquement sur toute la longueur du contenant 1, alors que la branche support 23 s'étand sur une partie seulement de la longueur axiale du contenant 1 de manière à réaliser un montage en porte à faux du contenant 1. Avantageusement le bras 21 est constitué d'un ensemble tubulaire, de manière que le contenant 1 repose par son bord roulé 7 sur la branche support 23, laquelle est alors insérée dans ledit bord roulé 27. Dans l'exemple de réalisation montré aux figures 1 et 2, les branches 22 et 23, ainsi que l'âme 24 sont disposés le long des parois latérales 3 du contenant de manière à s'étendre sensiblement parallèlenent aux dites parois latérales. A titre de variante, comme cela est par exemple montré aux figures 12 et 13 il est possible de réaliser le bras 21 à l'aide d'un piètement incluant également des branches respectivement d'appui 22a et de support 23a s'étendant dans des plans sensiblement parallèles, et également superposés, de manière à former une branche d'appui inférieure 22a et une branche support supérieure 23a. Dans cette variante de réalisation les braches 22a et 23a définissent une forme assimilable à un U de dimension sensiblement équivalente au polygone de sustantation du contenant 1, les branches 23a et 22a étant reliées par au moins une pièce de jonction 27 dont la hauteur définit la dimension de l'espace 12. Le contenant 1 est en conséquence enserré et supporté à sa périphérie par le bras supérieur 23a lequel est également avantageusement d'une longueur inférieure à celle du bras inférieur d'appui 22a. La pièce de jonction 27 peut être indiffféremment disposée selon l'axe de symétrie x-x′ du contenant 1 (figure 12) ou de manière décentrée (figure 13).

L'invention concerne également une méthode de nettoyage et d'évacuation de la litière d'un bac à litière consistant à partir d'un bac à litière conforme à l'invention, à enfiler au moins partiellement l'élement récupérateur de litière 14 à partir du bec verseur 6, de manière à envelopper complétement le contenant 1 sur au moins une partie de sa longueur axiale. L'opération est réalisée sans avoir à manipuler ou entrer en contact avec le contenant 1, par simple insertion de l'élément récupérateur de litière 14 dans l'espace 12. L'utilisateur peut ensuite saisir la poignée 8 puis procéder à un basculement de l'ensemble contenant 1 l'élément récupérateur de litière 14 de manière à assurer le déversement de la litière souillée par l'intermédiaire du bec verseur 6 dans le volume définit par l'élément récupérateur de litière 14. Cette opération de nettoyage peut donc être réalisée d'une manière particulièrement simple et aisée sans contact des mains de l'utilisateur avec la litière souillée, et sans risque aucun de déversement de litière souillée à l'extérieur de lélément récupérateur de litière 14.

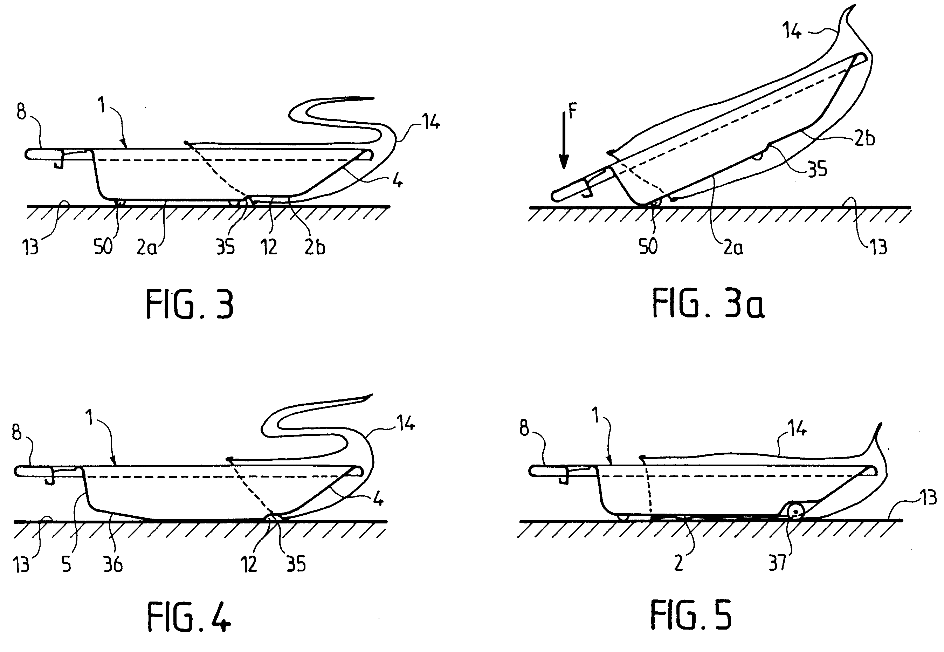

La variante de réalisation montrée aux figures 3 et 3a ne diffère de celle décrite précédemment que par une configuration différente des moyens d'espacement 11. Dans la variante montrée aux figures 3 et 3a les moyens d'espacement 11 consistent en un épaulement 35 ménagé dans le fond 2 pour définir un fond à deux niveaux décalés respectivenent 2a, 2b par rapport à la surface porteuse 13 dont l'un 2a repose en appui sur la surface porteuse 13 et l'autre 2b s'étend à distance de ladite surface pour consistuer l'espace 12. Le niveau 2b s'étend à partir de la paroi avant 4 du contenant 1 en direction de la paroi arrière 5. L'utilisation de la caisse à litière conforme à cette variante de réalisation est identique aux variantes de réalisation précédentes, l'enfilement de l'élément récupérateur de litière 14 pouvant être réalisé en deux étapes. La première étape (figure 3) consistant à enfiler tel que décrit précédemment, l'élément récupérateur de litière 14 jusqu'à ce qu'il vienne en butée contre l'épaulement 35, puis a exercer une pression sur la poignée 8 selon la flèche F de manière à faire basculer le bec verseur 6 vers le haut, en vue de poursuivre l'enfilement de l'élément récupérateur de litière 14 par dégagement du niveau 2a. L'utilisateur procède ensuite tel que décrit précédemment, pour assurer le versement de la litière souillée dans l'élément récupérateur de litière 14.

La figure 4 montre une autre variante de réalisation quine diffère de celle montrée aux figures 3 et 3a, que par la réalisation d'un pan incliné 36 joignant la partie du fond 2a, et la paroi arrière 5. Ce pan incliné 36 permet bien évidemment de faciliter le basculement du contenant 1 lors de la seconde phase d'enfilement en diminuant fortement le débattement nécessaire au basculement.

La figure 5 montre une autre variante de réalisation conforme à l'invention quine diffère des variantes précédemment décrites que par l'utilisation en tant que moyen d'espacement 11, d'au moins une paire de roulettes 37 solidaires du fond 2. La ou les paires de roulettes 37 sont montées sur le contenant 1 de manière à assurer la liaison entre le contenant 1 et la surface porteuse 13 en ménageant entre le fond 2 et ladite surface porteuse un espace 12. La ou les paires de roulettes 37 assument ainsi à la fois une fonction d'espacement et une fonction d'aide à l'enfilement de la paroi de l'élément récupérateur de litière 14 destinée à être inséré dans l'espace 12, puisque il suffit simplement à l'utilisateur de pousser et faire rouler le contenant 1 à l'intérieur de l'élément récupérateur 14.

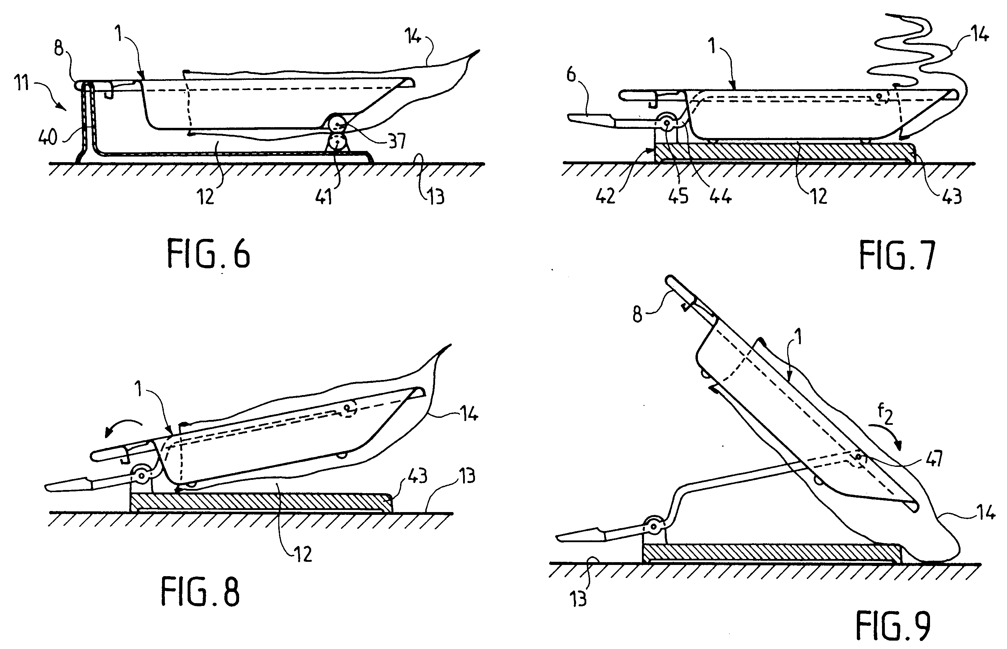

La variante de réalisation montrée à la figure 6 ne diffère de celle montrée à la figure 5 que par le montage du contenant 1 sur un moyen d'espacement 11 constitué par un bloc support 40 supportant d'un côté le contenant 1 par exemple, au niveau de la poignée 8 et par une roulette 41 disposée au droit et en regard de la roulette 37 et supportant le contenant 1 d'un autre côté. Dans une telle variante les roulettes 47 et 41 sont en appui relatif et l'enfilement du bac récupérateur de litière 14 dans l'espace 12 est obtenu par insertion et glissement entre les deux jeux de roulettes 37 et 41.

Les figures 7, 8 et 9 montrent une variante de réalisation dans laquelle le contenant 1 est monté sur un support 42 en appui sur la surface porteuse 13 par l'intermédiaire d'un socle 43. Le support 42 est associé à un système de basculement incluant une branche support 44, de préférence en forme de U de manière à supporter le contenant 1 par sa périphérie, ladite branche 44 étant par ailleurs montée à pivotement par un axe 45 sur le support 42. L'extrémité libre de la branche 44 est constitué par une manette 46. Le système à basculement permet ainsi à l'utilisteur, comme cela est montré à la figure 8, après avoir enfilé partiellement l'élément récupérateur de litière 14 sur la partie avant du contenant 1, de faire basculer le contenant 1 en appuyant sur la manette 46. Cette opération permet d'augmenter les dimensions de l'espace 12 et de faciliter ainsi l'enfilement, ou du moins de parfaire l'enfilement de l'élément récupérateur de litière 14.

Avantageusement comme cela est montré à la figure 9 il est possible de monter l'extrémité de la branche 44 sur le contenant 1 par l'intermédiaire d'une attache à pivot 47. Un tel montage permet à l'utilisateur, après l'enfilement complet du bac récupérateur de litière 14, de saisir la poignée 8, et de faire pivoter le contenant 1 autour de l'axe 47 selon la flèche f2 pour assurer le déversement de la litière souillée.

Les figures 10 et 11, montrent un contenant 1 associé à une embase 50 et supporté par celle-ci, à l'intérieur de laquelle viennent se bloquer les branches 23 des moyens d'espacement 11. La partie de l'embase 50 opposée à la poignée 8 comporte un logement 51, aménagé pour recevoir un bloc tiroir 52 dans lequel est monté à rotation un rouleau 53 de sacs plastiques détachables. Le bloc tiroir 52 comporte de manière classique, un volet presseur 54 articulé autour d'un axe 55, et maintenu en permanence en appui élastique contre une plaque 56 par l'intermédiaire d'un ressort 57. Ainsi, le rouleau 53 passe entre la plaque 56 et le volet 54, et il peut être saisi par l'utilisateur, séparé selon la découpe prévue puis enfilé sur le contenant 1 selon les modalités décrites précédemment.

D'autres moyens d'espacement 11 peuvent être utilisés sans pour autant sortir du cadre de l'invention, et il est ainsi possible de réaliser les moyens d'espacement 11 à l'aide de cales 50 (figure 3) solidaires du fond 2, lesdites cales étant bien évidemment disposées sur le fond 2 de manière à ménager à partir de l'avant du contenant 1 un espace 12 d'engagement suffisant pour l'élément récupérateur de litière 14.

La caisse à litière ainsi réalisée permet en conséquence un enfilement extrèmement simple et rapide d'un élément récupérateur de litière, tout en évitant à l'utilisateur un contact quelconque avec la litière souillée. Il y a également lieu de remarquer qu'en tant qu'élément récupérateur de litière 14, tout type de sac classique, courant, de dimension appropriée, peut convenir.

## Revendications

1. Caisse à litière pour animaux domestiques comprenant un contenant (1) délimitant un volume de stockage d'une masse de litière et étant limité par un fond (2) et des parois (3, 4, 5) s'élevant à partir du fond (2), ladite caisse étant destinée à reposer de manière stable sur une surface porteuse (13), et le contenant (1) étant associé d des moyens d'espacement (11) aptes à former un espace (12) entre la surface porteuse (13) et au moins d'une partie du fond (2), ledit espace (12) s'étendant sous au moins ladite partie du fond (2) caractérisée en ce que l'espace (12) s'étend sur une longueur axiale suffisante pour permettre l'enfilement au moins partiel du contenant (1) dans un élément récupérateur de litière (14), du type sac par exemple, en engageant une portion de paroi dudit élément récupérateur (14) dans l'espace (12), de manière à envelopper complètement le contenant (1) sur au moins une partie de sa longueur axiale.

2. Caisse à litière selon la revendication 1 caractérisée en ce que les moyens d'espacement (11) sont constitués d'un support en appui sur la surface porteuse (13), et sur lequel repose le contenant (1).

3. Caisse à litière selon la revendication 2 caractérisée en ce que le contenant (1) est monté en porte à faux sur le support.

4. Caisse à litière selon les revendications 2 ou 3 caractérisée en ce que le support est constitué d'un piètement incluant deux bras (21) s'étendant dans des plans sensiblement parallèles.

5. Caisse à litière selon la revendication 4 caractérisée en ce que les deux bras (21) s'étendent sensiblement parallèlement le long de deux parois latérales (3) opposées et comportent une branche d'appui (22) sur la surface porteuse (13), et une branche de support (23) du contenant (1), les deux branches se joignant à une extrémité pour définir un bras en U.

6. Caisse à litière selon la revendication 4 caractérisée en ce que les deux bras (21) s'étendent dans des plans supperposés pour former une branche supérieure (23) et une branche inférieure (22a) chaque branche définissant un U, et les branches étant reliées entre elles par au moins une pièce de liaison (27) interposée entre les branches (23, 23a), la branche supérieure (23a) supportant le contenant (1) et enserrant sa périphérie.

7. Caisse à litière selon la revendication 2 caractérisée en ce que le support est constitué d'au moins une paire de roulettes (37) montées sur le fond (2).

8. Caisse à litière selon la revendication 2 caractérisée en ce que le support est constitué de cales (50̸) solidaires du fond (2), lesdites cales étant disposées sur le fond de manière à ménager à partir de l'avant du contenant (1) un espace (12) d'engagement suffisant pour l'élément récupérateur (14).

9. Caisse à litière selon la revendication 1 caractérisée en ce que les moyens d'espacement (11) consistent en un épaulement (35) ménagé dans le fond (2) pour définir un fond à deux niveaux décalés (2a, 2b), dont l'un (2a) repose en appui sur la surface porteuse (13) et l'autre (2b) s'étend à distance de ladite surface (13) pour constituer l'espace (12).

10. Caisse à litière selon les revendications 7 ou 8 ou 9 caractérisée en ce que le contenant (1) est monté sur un support (42) associé à un système à basculement permettant par rotation du contenant (1), d'augmenter les dimensions de l'espace (12) et de faciliter l'enfilement de l'élément récupérateur (14).

11. Caisse à litière selon l'une des revendications précédentes caractérisée en ce que le contenant (1) est pourvu d'un bec verseur (6), et d'une poignée de manutention disposée en opposition au dit bec verseur (6).

12. Caisse à litière selon l'un des revendications précédentes caractérisée en ce que le contenant (1) est pourvu sur sa face interne d'une couche de revêtement antiadhésif tel qu'une peinture silicone ou un polyester, un PTFE ou l'un de ses dérivés par exemple.

## Claims

1. A litter tray for domestic animals, the tray comprising a container (1) defining a storage volume for storing a mass of litter and being defined by a bottom (2) and by walls (3, 4, 5) upstanding from the bottom (2), said tray being designed to rest in stable manner on a carrier surface (13), and the container (1) being associated with spacer means (11) suitable for forming a space (12) between the carrier surface (13) and at least a portion of the bottom (2), said space (12) extending beneath at least said portion of the bottom (2)
characterized in that the space (12) extends over sufficient axial length to enable the container (1) to be inserted at least partially in a litter recovery element (14), e.g. of the bag type, by engaging a fraction of the wall of said recovery element (14) in the space (12) in such a manner as to completely envelop the container (1) over at least a portion of its axial length.

2. A litter tray according to claim 1, characterized in that the spacer means (11) are constituted by a support bearing against the carrier surface (13) and on which the container (1) rests.

3. A litter tray according to claim 2, characterized in that the container (1) is mounted in an overhanging configuration on the support.

4. A litter tray according to claim 2 or 3, characterized in that the support is constituted by a stand including two arms (21) that extend in substantially parallel planes.

5. A litter tray according to claim 4, characterized in that the two arms (21) extend substantially parallel along two opposite side walls (3), each arm comprising a bearing branch (22) bearing on the carrier surface (13) and a support branch (23) supporting the container (1), the two branches being joined together at one end to define a U-shaped arm.

6. A litter tray according to claim 4, characterized in that the two arms (21) extend in superposed planes to form a top branch (23) and a bottom branch (22a), each branch defining a U-shape, and the branches being interconnected by at least one link piece (27) interposed between the branches (23, 23a), the top branch (23a) supporting the container (1) and surrounding its periphery.

7. A litter tray according to claim 2, characterized in that the support is constituted by at least one pair of wheels (37) mounted on the bottom (2).

8. A litter tray according to claim 2, characterized in that the support is constituted by blocks (50) secured to the bottom (2), said blocks being disposed on the bottom in such a manner as to leave sufficient engagement space (12) running from the front of the container (1) for engagement of the recovery element (14).

9. A litter tray according to claim 1, characterized in that the spacer means (11) are constituted by a shoulder (35) formed in the bottom (2) to define a bottom having two offset levels (2a, 2b), one of which (2a) rests by bearing against the carrier surface (13) and the other of which (2b) extends at a distance from said surface (13) to constitute the space (12).

10. A litter tray according to claim 7 or 8 or 9, characterized in that the container (1) is mounted on a support (42) associated with a tipper system enabling the size of the space (12) to be increased by rotation of the container (1) and facilitating insertion into the recovery element (14).

11. A litter tray according to any preceding claim, characterized in that the container (1) is provided with a pouring edge (6) and with a handle disposed on the side opposite said pouring edge (6).

12. A litter tray according to any preceding claim, characterized in that the container (1) is provided on its inside face with a layer of non-stick coating such as a silicone paint or a polyester, a PTFE, or one of the derivatives thereof, for example.

## Patentansprüche

1. Ein Streukasten für Haustiere umfassend einen Behälter (1), der ein Haltevolumen einer Streumasse begrenzt, und der durch einen Boden (2) und Wände (3, 4, 5) begrenzt ist, die sich vom Boden (2) aus erheben, dabei ist dieser Kasten dazu bestimmt, stabil auf einer Tragefläche (13) zu ruhen, und der Behälter (1) mit Abstandhaltevorrichtungen (11) verbunden, die zum Bilden eines Zwischenraumes (12) zwischen der Tragefläche (13) und mindestens einem Teil des Bodens (2) geeignet sind, dabei erstreckt sich dieser Zwischenraum mindestens unterhalb diesem Teil des Bodens (2), dadurch gekennzeichnet, daß der Zwischenraum (12) sich über eine axiale Länge hin erstreckt, die genügend groß ist, das mindestens teilweise Einschieben des Behälters (1) in ein Sammelteil (14) für die Streu zu erlauben, z.B. vom Typ Beutel, durch Einfügen eines Teils der Wand dieses Sammelteils (14) in den Zwischenraum (12), dabei den Behälter (1) mindestens auf einer Seite seiner axialen Länge vollständig umschließend.

2. Ein Streukasten gemäß Anspruch 1, dadurch gekennzeichnet, daß die Abstandhalteteile (11) aus einem Träger bestehen, der auf der Tragefläche (13) ruht, und auf dem der Behälter (1) ruht.

3. Ein Streukasten gemäß Anspruch 2, dadurch gekennzeichnet, daß der Behälter (1) freitragend auf dem Träger angebracht ist.

4. Ein Streukasten gemäß Anspruch 2 oder 3, dadurch gekennzeichnet, daß der Träger aus einem Gestell besteht, das zwei Arme (21) umfaßt, die sich in merklich parallelen Ebenen erstrecken.

5. Ein Streukasten gemäß Anspruch 4, dadurch gekennzeichnet, daß die sich beiden Arme (21) merklich parallel längs zwei gegenüberliegenden Seitenwänden (3) erstrecken und eine stützende Abzweigung (22) auf der Tragefläche (13) und eine tragende Abzweigung (23) des Behälters (1) umfassen, dabei vereinigen sich die beiden Abzweigungen an einem Ende, um einen U-förmigen Arm bereitzustellen.

6. Ein Streukasten gemäß Anspruch 4, dadurch gekennzeichnet, daß die sich beiden Arme (21) in übereinanderliegenden Ebenen erstrecken, um eine obere Abzweigung (23) und eine untere Abzweigung (23a) zu bilden, jede Abzweigung ein U bildend, dabei sind die Abzweigungen untereinander durch mindestens ein Verbindungsstück (27) verbunden, das zwischen den Abzweigungen (23, 23a) eingefügt ist, dabei trägt die obere Abzweigung (23a) den Behälter (1) und umschließt seinen Umfang.

7. Ein Streukasten gemäß Anspruch 2, dadurch gekennzeichnet, daß der Träger aus mindestens einem Paar am Boden (2) angebrachten Rollen (37) besteht.

8. Ein Streukasten gemäß Anspruch 2, dadurch gekennzeichnet, daß der Träger aus Unterlagen (50), fest mit dem Boden (2) verbunden, besteht, dabei sind diese Unterlagen so auf dem Boden angebracht, um einen Zwischenraum (12) vom Vorderteil des Behälters (1) aus zu definieren, der für das Sammelteil (14) ausreichend ist.

9. Ein Streukasten gemäß Anspruch 1, dadurch gekennzeichnet, daß die Trennelemente (11) aus einem Vorsprung (35), angebracht im Boden (2), bestehen, um einen Boden mit zwei versetzten Ebenen (2a, 2b) zu definieren, von denen eine (2a) stützend auf der Tragefläche (13) ruht, und sich die andere (2b) entfernt von dieser Fläche (13) zur Bildung des Zwischenraumes (12) erstreckt.

10. Ein Streukasten gemäß Anspruch 7 oder 8 oder 9, dadurch gekennzeichnet, daß der Behälter (1) auf einem Träger (42) angebracht ist, der mit einem schwingenden System verbunden ist, das durch Rotation des Behälters (1) das Vergrößern des Zwischenraumes (12) und das Erleichtern des Einschiebens des Sammelteils (14) ermöglicht.

11. Ein Streukasten gemäß einem der vorhergehenden Ansprüche, dadurch gekennzeichnet, daß der Behälter (1) mit einem Gießkragen (6) ausgestattet ist, und mit einem Henkel zur Instandhaltung, die diesem Gießkragen (6) gegenüberliegt.

12. Ein Streukasten gemäß einem der vorhergehenden Ansprüche, dadurch gekennzeichnet, daß der Behälter (1) auf seiner Innenseite mit einer Schicht aus selbsthaftendem Überzug wie z.B. einem Silikon- oder Polyesterlack, aus PTFE oder einem seiner Derivate bereitgestellt ist.
